Europäisches Patentamt

European Patent Office

Office européen des brevets

(11) Veröffentlichungsnummer: **0 158 326**
**B1**

(12) EUROPÄISCHE PATENTSCHRIFT

(45) Veröffentlichungstag der Patentschrift: 03.10.90

(51) Int. Cl.⁵: **F 24 D 11/02,** F 25 B 17/08

(21) Anmeldenummer: 85104291.1

(22) Anmeldetag: 09.04.85

(54) Adsorptionsapparat.

(30) Priorität: 09.04.84 DE 3413349

(43) Veröffentlichungstag der Anmeldung:
16.10.85 Patentblatt 85/42

(45) Bekanntmachung des Hinweises auf die
Patenterteilung:
03.10.90 Patentblatt 90/40

(84) Benannte Vertragsstaaten:
AT BE CH FR GB IT LI SE

(56) Entgegenhaltungen:
EP-A-0 086 383
EP-A-0 091 095
DE-A-2 637 784

(73) Patentinhaber: ZEO-TECH Zeolith Technologie
GmbH
Westendstrasse 125
D-8000 München 2 (DE)

(72) Erfinder: Kaubek, Fritz, Dipl.-Ing.
Herbststrasse 14
D-8035 Gauting (DE)
Erfinder: Maier-Laxhuber, Peter, Dr.
Saumweberstrasse 14
D-8000 München 60 (DE)

Courier Press, Leamington Spa, England.

## Beschreibung

Die Erfindung betrifft Adsorptionsapparate mit Wärmepumpeneffekt im Einsatz als Elektro-Wärmespeicher.

Um den stark schwankenden Stromverbrauch zu glätten, sind heute Elektro-Wärmespeicher im Einsatz. Mit tarifgünstigem Strom wird in diesen Geräten während der Aufladephase ein Speichermaterial wie z.B. Keramik, Gußeisen, Öl oder Wasser erhitzt. In der anschließenden Entladephase wird die gespeicherte Wärme über geeignete Wärmeentnahmesysteme dem Verbraucher zugeführt. Im Einsatz sind Nachtstromspeicher für die Beheizung einzelner Räume und Zentral-Wärmespeicher, die von einer Stelle aus mehrere Verbraucher über ein Wärmeverteilsystem versorgen. Um den Platzbedarf der Elektro-Wärmespeicher so gering wie möglich zu halten, werden die Speichermaterialien teilweise über 900°C erhitzt. Mit aufwendigen Isolationsmaßnahmen müssen unerwünschte Wärmeverluste verhindert werden. Ein Wärmepumpeneffekt mit entsprechender Energieeinsparung ist mit diesen Geräten nicht möglich.

Zeolithe sind feste Alumino-Silikate mit regelmäßiger Kristallstruktur. Adsorptionszeolithe haben die Eigenschaft, innerhalb ihrer Kristallstruktur beträchtliche Mengen Wasser zu adsorbieren. Bei dieser Adsorption wird Wärme freigesetzt. Um das Wasser wieder Zu desorbieren muß Wärme aufgewandt werden.

In den deutschen Patentoffenlegungsschriften P 32 07 656 (& EP-A-086 383) und P 32 12 608 werden Wärmespeicheranlagen mit dem Adsorptionsstoffpaar Zeolith/Wasser vorgeschlagen. Mittels Niedertarifstrom wird dort Wasserdampf aus dem Adsorptionsstoff Zeolith desorbiert und in einem Kondensator verflüssigt. Der kondensierte Wasserdampf wird später unter Aufnahme von Umgebungswärme erneut verdampft und im Adsorptionsstoff unter Wärmefreisetzung bei hohen Temperaturen adsorbiert' Die Regelung derartiger Anlagen ist nur über mehrere Ventile bzw. Rückschlagklappen mit entsprechenden Steuereinheiten möglich. Bei kleinen Elektro-Wärmespeichern ist dieser regelungstechnische Mehraufwand trotz einer 30%igen Energieeinsparung nicht wirtschaftlich.

Der Erfindung liegt die Aufgabe zugrunde, periodische Adsorptionsverfahren als Elektro-Wärmespeicher zu nutzen und mit dem zur Verfügung stehenden Wärmepumpeneffekt Energie einzusparen.

Die Aufgabe wird gemäß der Ansprüche 1 bzw. 7 gelöst. Die Unteransprüche enthalten vorteilhafte Verfahren und Ausgestaltungen.

Der erfindungsgemäße Adsorptions-Elektrowärmespeicher besteht zum einen aus den konventionellen Teilen Elektroheizung, Wärmeentnahmesystem und Regelung und zum anderen aus dem Adsorptionsteil.

Der Adsorptionsteil besteht aus zwei, über eine Dampfleitung zusammenhängenden Behältern, dem Adsorptionsstoffbehälter, der im konventionellen Teil des Elektro-Wärmespeichers an die Stelle des Speichermaterials tritt, und dem Sammelbehälter für Kondensat. Von den Behältern führt eine Dampfleitung zu einem Kondensator und ein Wasserkreislauf zu einem Wärmesammler. Der Wasserkreislauf enthält eine pumpe.

Der Betriebsablauf ist in zwei Phasen unterteilt.

a) Aufladephase

Über die Elektroheizung wird der Adsorptionsstoffbehälter auf 250-300°C aufgeheizt. Aus dem Adsorptionsstoff wird dadurch Wasserdampf desorbiert, der im Kondensator verflüssigt wird und als Kondensat in den Sammelbehälter fließt. Die Kondensationswärme wird als Nutzwärme bei Temperaturen bis zu 100°C abgeführt.

b) Entladephase

Die Elektroheizung ist außer Betrieb. Aus dem Adsorptionsstoffbehälter wird über das konventionelle Wärmeentnahmesystem Wärme entnommen. Bei sinkenden Dampfdrücken verdampft im Sammelbehälter Kondensat und kühlt das verbleibende Wasser ab. Der Dampf wird vom Adsorptionsstoff bei hohen Temperaturen exotherm adsorbiert. Die Adsorptionswärme kann bei Bedarf über das Wärmeentnahmesystem abgeführt werden. Die Pumpe im Wasserkreislauf fördert abgekühltes Restkondensat durch den Wärmesammler.

Damit der Wasserkreislauf keine Wärme an den Wärmesammler abgibt, setzt eine Regeleinheit die Pumpe erst dann in Betrieb, wenn die Temperatur im Wärmesammler höher ist, als die Kondensattemperatur im Sammelbehälter. Darüber hinaus kann über diese Regeleinheit der Betrieb der Pumpe von weiteren Kriterien abhängig gemacht werden. So kann die Pumpe beispielsweise erst dann anlaufen, wenn im Wärmesammler eine bestimmte Temperatur überschritten ist.

Vorteilhaft kann dieses Verfahren als Frostschutzsicherung eingesetzt werden oder zur Aufrechterhaltung einer bestimmten Temperatur des Abwärmestromes (z.B. Abwasser, Kühlluft) dienen.

Bei konventionellen Elektro-Wärmespeichern zur Raumheizung besteht die Möglichkeit, an extrem kalten Tagen tagsüber den Wärmespeicher mit Strom nachzuladen. Da an diesen sehr kalten Tagen unter Umständen die Wärmeaufnahme über den Wärmesammler eingeschränkt sein kann, wird die Nachladeleistung vorteilhaft über eine elektrische Heizung im Sammelbehälter an das System übergeben. Die Wärmeabgabeleistung aus dem Adsorptions-Elektrowärmespeicher erhöht sich dadurch um etwa 30% gegenüber der Nachladeleistung, da durch die Adsorption des Wasserdampfes im Adsorptionsstoff die chemisch gespeicherte Adsorptionswärme freigesetzt wird.

Der erfindungsgemäße Adsorptions-Elektrowärmespeicher läßt sich mit Vorteil auch in einen Kachelofen integrieren. Heiße Verbrennungsgase übernehmen dabei von Fall zu Fall die Desorptionsarbeit. Der Kachelofen kann auf diese Weise mehr Wärme speichern und über den Wärmesammler zusätzliche Wärme gewinnen. Die Abkühlzeit des Kachelofens ist verlängert.

Eine weitere vorteilhafte Einsatzmöglichkeit ergibt die Kopplung eines Adsorptions-Elektrowärmespeichers mit einem Warmwasserspeicher. Der Adsorptionsteil gewinnt über den Wärmepumpeneffekt zusätzliche Wärme aus der Luft oder aus dem Abwasser und erlaubt über den Wärmespeichereffekt eine kleine Baugröße des Wasserspeichers. Der Einsatz von Nachtstrom in den Sommermonaten ist auch für das Elektrizitätswerk von Vorteil.

Adsorptionsapparate arbeiten zumindest teilweise unter Vakuumbedingungen. Eine ausreichende Dichtigkeit des Systems ist Grundvoraussetzung für einen reibungslosen Betrieb. Es empfiehlt sich deshalb den Adsorptionsteil beim Hersteller als kompaktes, betriebsfertiges Geräteteil zu montieren. Beim Einsatz des Wärmesammlers als Außenabsorber muß dieser bei der Installation durch die Gebäudewand nach außen geschoben werden, während die restlichen Gerätekomponenten innerhalb des Gebäudes verbleiben. In die Gebäudewand wird hierzu ein Mauerkasten eingebaut, der bei der Geräteinstallation durch einen passenden Isolationskörper verschlossen wird. Dieser Isolationskörper fixiert nach außen den Wärmesammler und hat im Innern Platz für die flexiblen Ausgleichsleitungen zum Sammelbehälter.

In einer weiteren, vorteilhaften Ausgestaltung enthält der Isolationskörper ein Lüftungssystem, das warme Abluft aus dem Gebäude dem außenliegenden Wärmesammler zur Wärmerückgewinnung zuführt.

Als Adsorptionsstoffe haben sich die Zeolithtypen Na-A, Mg-A, Na-Y, H-Y und Na-X bewährt. Sie haben neben einer ausreichenden Temperatur- und Zyklenstabilität sehr gute Adsorptionseigenschaften für Wasser.

Das Kondensat im Sammelbehälter kann durch den Verdampfungsvorgang gefrieren. Die dabei freiwerdende latente Wärme kann im Adsorptionsstoff bei höheren Temperaturen, vermehrt um die Adsorptionswärme genutzt werden. Bei einem ausreichend groß dimensionierten Sammelbehälter kann die gesamte Verdampfungsenthalpie aus der latenten Umwandlungswärme gedeckt werden. Das in der Entladephase erzeugte Eis wird in der Aufladephase durch die Kondensationswärme wieder geschmolzen. Pro Kilogramm Adsorptionsstoff sind hierzu ca. 1,3 Kilogramm Wasser nötig.

Soll keine Umwandlungswärme genutzt werden und über den Wärmesammler aus der Umgebung auch bei Temperaturen unter 0°C Wärme eingekoppelt werden, so kann dem Wasser im Sammelbehälter ein Frostschutzmittel zugesetzt werden. Geeignet sind hier Stoffe mit niedrigem Dampfdruck wie Salze oder Laugen.

Falls nur Umgebungswärme über 0°C gesammelt wird, ist kein Frostschutzmittel nötig. Damit aber bei Frostwetter das Wasser im Wärmesammler nicht gefriert, kann der Wärmesammler oberhalb des maximalen Wasserstandes im Sammelbehälter installiert werden. Bei Stillstand der Pumpe läuft dann das Wasser in den Sammelbehälter zurück. Ein Wassersyphon im Wasserkreislauf verhindert, daß während der Aufladephasen Wasserdampf im Wärmesammler kondensieren kann und Wärme nach draußen verloren geht.

Der beschriebene Adsorptions-Elektrowärmespeicher enthält keine Ventile und erfordert nur für die Steuerung der Pumpe einen geringen Regelaufwand.

Die Stromkosten sind gegenüber den konventionellen Systemen um 30% niedriger. Die elektrische Anschlußleistung ist um ein Drittel reduziert.

Mit einer einfachen Wärmerückgewinnung aus Abluft gelingt es, Lüftungswärmeverluste zu reduzieren. Da aus den konventionellen Elektro-Wärmespeichern außer dem Speichermaterial alle Komponenten unverändert übernommen werden können, ergeben sich nur geringfügige Mehrkosten. Aus einem reinen Wärmespeichergerät wird eine steuerlich begünstigte Wärmepumpenanlage mit Wärmerückgewinnungsmöglichkeit. Während der Entladephase ist das neue System im Gegensatz zu anderen Wärmepumpensystemen immer in Bereitschaft Umgebungswärme aufzunehmen, gleichgültig wie hoch die Temperaturen und die Mengen sind. Selbst geringste Wärmemengen lassen sich ohne Einschränkung nutzen.

Ausführungsbeispiele der Erfindung sind in der Zeichnung dargestellt und werden im folgenden näher beschrieben.

Es zeigen

Fig. 1 einen Adsorptions-Elektrowärmespeicher zur Raumheizung,

Fig. 2 einen Adsorptions-Elektrowärmespeicher in Kombination mit einem Warmwasserspeicher.

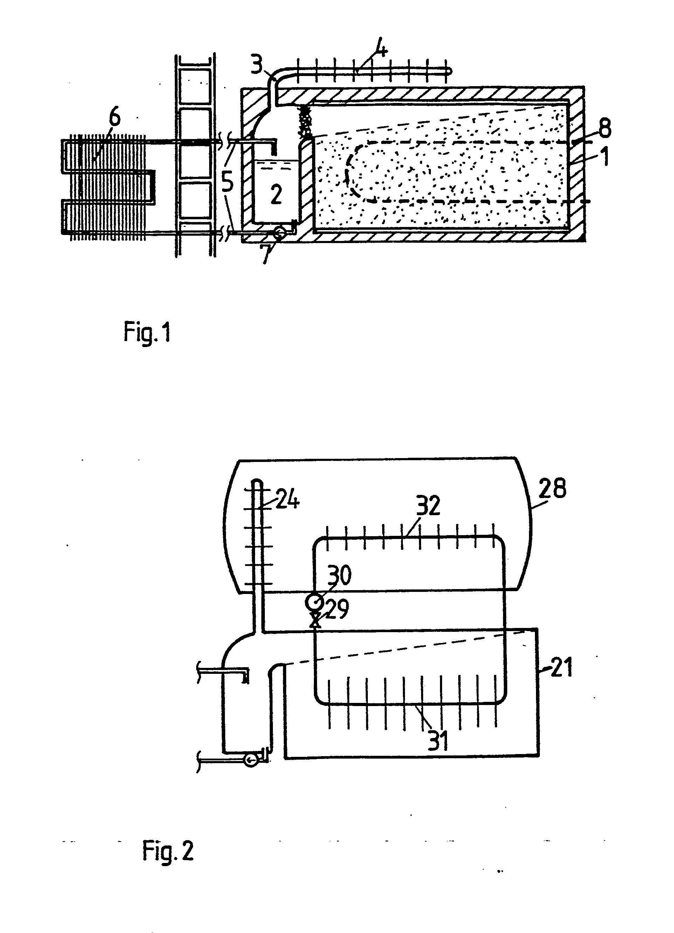

Figur 1 zeigt einen Adsorptionsstoffbehälter (1) an den seitlich ein kleiner Sammelbehälter (2) angeschlossen ist. Von diesem führt eine Dampfleitung (3) zu einem Kondensator (4) und zwei flexible Flüssigkeitsleitungen (5) zu einem Wärmesammler (6). Der zugehörige Wasserkreislauf enthält eine Pumpe (7).

Der Betrieb wird in zwei Teilphasen unterteilt:

a) Aufladephase

Der Adsorptionsstoffbehälter wird durch elektrische Heizstäbe (ß) auf 250-300°C aufgeheizt. Während dieser Zeit wird Wasser aus dem Adsorptionsstoff ausgedampft. Der Dampf kann im Kondensator (4) kondensieren und Wärme an die Raumluft abgeben. Das Kondensat fließt in den Sammelbehälter (2) und verbleibt dort bis zur Entladephase.

b) Entladephase

Der Adsorptionsstoffbehälter wird vom Luftstrom abgekühlt. Bei sinkender Adsorptionsstofftemperatur sinkt auch der Wasserdampfdruck in den Behältern. Wasser aus dem Sammelbehälter (2) kann verdampfen und im Adsorptionsstoff adsorbiert werden. Das Wasser im Sammelbehälter wird kalt der Adsorptionsstoff heiß. Immer wenn die Wassertemperatur im Sammelbehälter (2) unter die Außentemperatur sinkt, pumpt die Pumpe (7) Wasser durch den Wärmesammler. Das kalte Wasser nimmt aus der Außenluft Wärme auf und überträgt sie an das verdampfende Wasser im Sammelbehälter (2).

In Figur 2 ist ein Adsorptions-Elektrowärmespeicher mit einem Warmwasserspeicher kombiniert. Der Kondensator (24) befindet sich innerhalb des Warmwasserspeichers (28). Während der Aufladephase gibt dieser die Kondensationswärme an die Wasserfüllung des Warmwasserspeichers (28) ab. Innerhalb der Entladephase wird die Nutzwärme aus dem Adsorptionsstoffbehälter (21) über ein Wasser-Dampf-System an die Wasserfüllung übertragen. Bei zu kaltem Speicherwasser öffnet das Ventil (29). Wasser aus dem Gefäß (30) fließt in den Verdampfer (31) und verdampft dort. Der Dampf gibt im Verflüssiger (32) die Kondensationswärme ab. Das Kondensat sammelt sich wieder im Gefäß (30).

## Patentansprüche

1. Verfahren zum Heizen und/oder Kühlen mit einem periodischen Adsorptionsapparat, bei dem aus einem Adsorptionsstoff durch Zufuhr von Elektrowärme endotherm ein Arbeitsstoff desorbiert, dieser Arbeitsstoff verflüssigt, in einem Sammelbehälter gesammelt und nachfolgend durch Zuführen von Verdampfungswärme mittels einer Umwälzpumpe verdampft und im Adsorptionsstoff exotherm adsorbiert wird, dadurch gekennzeichnet, daß der Arbeitsstoff durch Teilverdampfen im Sammelbehälter erstarrt und die dabei freigesetzte Erstarrungswärme als Verdampfungswärme genutzt wird.

2. Verfahren nach Anspruch 1, dadurch gekennzeichnet, daß die gesamte Verdampfungswärme aus Erstarrungswärme aufgebracht wird.

3. Verfahren nach Anspruch 1 oder 2, mit Zeolith als Adsorptionsstoff und Wasser als Arbeitsstoff, dadurch gekennzeichnet, daß Zeolithe vom Typ Na-A, Mg-A, Na-Y, H-Y oder Na-X verwendet Werden.

4. Verfahren nach einem der vorangehenden Ansprüche, dadurch gekennzeichnet, daß die nicht erstarrte Arbeitsstoffmenge zur Wärmeaufnahme umgepumpt wird.

5. Verfahren nach einem der vorangehenden Ansprüche, dadurch gekennzeichnet, daß dem Arbeitsstoff ein den Erstarrungspunkt erniedrigender Stoff beigemischt ist.

6. Verfahren nach Anspruch 5, dadurch gekennzeichnet, daß der beigemischte Stoff einen gegenüber dem Arbeitsstoff niedrigeren Dampfdruck aufweist.

7. Vorrichtung zum Durchführen des Verfahrens nach einem der vorhergehenden Ansprüche mit einem Adsorptionsstoffbehälter (1), einem Kondensator (4) und einem Sammelbehälter (2) für den flüssigen Arbeitsstoff, dadurch gekennzeichnet, daß der Sammelbehälter als Verdampfer ausgebildet ist und über eine Dampfleitung direkt mit dem Adsorptionsstoffbehälter (1) verbunden ist.

8. Vorrichtung nach Anspruch 7, dadurch gekennzeichnet, daß über eine elektrische Heizeinrichtung der Arbeitsstoff im Sammelbehälter (2) zeitweise erwärmt wird.

9. Vorrichtung nach einem der Ansprüche 7 oder 8, mit einem Wärmesammler (6), dadurch gekennzeichnet, daß über den Wärmesammler (6) Verdampfungswärme in den Sammelbehälter (2) übertragen wird.

10. Vorrichtung nach einem der Ansprüche 7 bis 9 dadurch gekennzeichnet, daß eine Regeleinrichtung vorhanden ist, welche die Temperatur des Wärmesammlers (6) mit der Temperatur des Arbeitsstoffes im Sammelbehälter (2) vergleicht.

11. Vorrichtung nach Anspruch 10 mit einer Pumpe (7) zwischen Wärmesammler (6) und Sammelbehälter (2), dadurch gekennzeichnet, daß durch die Regeleinrichtung die Pumpe (7) dann in Betrieb gesetzt wird, wenn die Temperatur im Wärmesammler (6) höher ist als die Temperatur des Arbeitsstoffes im Sammelbehälter (2).

12. Vorrichtung nach Anspruch 11, dadurch gekennzeichnet, daß die pumpe (7) in Betrieb geht, wenn die Temratur im Wärmesammler (6) einen vorgewählten Wert übersteigt.

13. Vorrichtung nach einem der Ansprüche 9, bis 12, dadurch gekennzeichnet, daß der Wärmesammler (6) so angeordnet ist, daß der Arbeitsstoff in den Sammelbehälter auslaufen kann.

14. Vorrichtung nach einem der vorangehenden Ansprüche 9 bis 13, dadurch gekennzeichnet, daß an den Wärmesammler (6) ein Lüftungssystem angeschlossen ist, das Wärme aus einem Abluftstrom an den Arbeitsstoff überträgt.

15. Vorrichtung nach einem der Ansprüche 7 bis 14, dadurch gekennzeichnet, daß während der Desorptionsphase über die Kondensationswärme Wasser in einem Warmwasserspeicher (28) erwärmt wird.

## Revendications

1. Procédé de chauffage et/ou de refroidissement avec un appareil d'adsorption périodique, qui consiste à désorber endothermiquement une substance de travail d'une substance d'adsorption par envoi de chaleur électrique, à liquéfier cette substance de travail, à la recueillir dans une cuve collectrice et, ensuite, à l'évaporer par apport de chaleur d'évaporation, au moyen d'une pompe de circulation, et à l'adsorber exothermiquement dans la substance d'adsorption, caractérisé en ce qu'il consiste à solidifier la substance de travail par évaporation partielle dans la cuve collectrice et à utiliser, à cet effet, la chaleur de solidification libérée comme chaleur d'évaporation.

2. Procédé suivant la revendication 1, caractérisé en ce qu'il consiste à fournir toute la chaleur d'évaporation à partir de la chaleur de solidification.

3. Procédé suivant la revendication 1 ou 2, avec du zéolithe comme substance d'adsorption et de l'eau comme substance de travail, caractérisé en ce qu'il consiste à utiliser des zéolithes de type Na-A, Mg-A, Na-Y, H-Y ou Na-X.

4. Procédé suivant l'une des revendications précédentes, caractérisé en ce qu'il consiste à faire circuler par pompage la quantité de substance de travail qui n'est pas solidifiée pour absorber de la chaleur.

5. Procédé suivant l'une des revendications précédentes, caractérisé en ce qu'il consiste à ajouter, à la substance de travail, une substance abaissant le point de solidification.

6. Procédé suivant la revendication 5, caractérisé en ce que la substance ajoutée a une tension de vapeur plus basse que la substance de travail.

7. Dispositif pour la mise en oeuvre du procédé suivant l'une des revendications précédentes, comprenant un récipient pour la substance d'adsorption (1), un condenseur (4) et une cuve collectrice (2) pour la substance de travail liquide, caractérisé en ce que la cuve collectrice est constituée en évaporateur et communique, par un conduit pour la vapeur, directement avec le récipient pour la substance d'adsorption (1).

8. Dispositif suivant la revendication 7, caractérisé en ce que la substance de travail, dans la cuve collectrice (2), est chauffée de temps en temps par un dispositif électrique de chauffage.

9. Dispositif suivant l'une des revendications 7 ou 8, comprenant un accumulateur de chaleur (6), caractérisé en ce que la chaleur d'évaporation est transmise à la cuve collectrice (2) par l'accumulateur de chaleur (6).

10. Dispositif suivant l'une des revendications 7 à 9, caractérisé en ce qu'il est prévu un dispositif de régulation, qui compare la température de l'accumulateur de chaleur (6) à la température de la substance de travail dans la cuve collectrice (2).

11. Dispositif suivant la revendication 10, comprenant une pompe (7) entre l'accumulateur de chaleur (6) et la cuve collectrice (2), caractérisé en ce que la pompe (7) est mise en fonctionnement par le dispositif de régulation, quand la température dans l'accumulateur de chaleur (6) est plus élevée que la température de la substance de travail dans la cuve collectrice (2).

12. Dispositif suivant la revendication 11, caractérisé en ce que la pompe (7) entre en fonctionnement quand la température dans l'accumulateur de chaleur (6) dépasse un seuil prescrit.

13. Dispositif suivant l'une des revendications 9 à 12 caractérisé, en ce que l'accumulateur de chaleur (6) est disposé de manière que la substance de travail puisse s'échapper dans la cuve collectrice.

14. Dispositif suivant l'une des revendications précédentes 9 à 13, caractérisé en ce qu'à l'accumulateur de chaleur (6) est raccordé un système de ventilation, qui transmet la chaleur d'un courant d'air vicié à la substance de travail.

15. Dispositif suivant l'une des revendications 7 à 14, caractérisé en ce que pendant la phase de désorption de l'eau d'un réservoir d'eau chaude (28) est chauffée par la chaleur de condensation.

**Claims**

1. A process for heating and/or cooling comprising a periodic adsorption device, in which a working substance is desorbed endothermically from an adsorption substance by a supply of electric heat, this working substance is liquefied, collected in a collecting container, and then vaporised by a supply of vaporisation heat using a circulating pump and is adsorbed exothermically in the adsorption substance, characterised in that the working substance is frozen by partial vaporisation in the collecting container and the heat released by the freezing process is used as vaporisation heat.

2. A process as claimed in claim 1, characterised in that the entire vaporisation heat is applied from the heat resulting from the freezing process.

3. A process as claimed in claim 1 or claim 2, using zeolite as adsorption substance and water as working substance, characterised in that zeolites of the type Na-A, Mg-A, Na-Y, H-Y or Na-X are used.

4. A process as claimed in one of the preceding claims, characterised in that the unfrozen quantity of working substance is circulated for the absorption of heat.

5. A process as claimed in one of the preceding claims, characterised in that a substance which reduces the freezing point is added to the working substance.

6. A process as claimed in claim 5, characterised in that the added substance has a vapour pressure which is lower than that of the working substance.

7. A device for executing the process claimed in one of the preceding claims comprising an adsorption substance container (1), a condenser (4) and a collecting container (2) for the liquid working substance, characterised in that the collecting container is in the form of a vaporiser and is directly connected to the adsorption substance container (1) via a vapour line.

8. A device as claimed in claim 7, characterised in that the working substance in the collecting container (2) is heated periodically via an electric heating device.

9. A device as claimed in claim 7 or 8, comprising a heat collector (6), characterised in that via the heat collector (6) vaporisation heat is transferred into the collecting container (2).

10. A device as claimed in one of claims 7 to 9, characterised in that a regulating device is provided which compares the temperature of the heat collector (6) with the temperature of the working substance in the collecting container (2).

11. A device as claimed in claim 10, comprising a pump (7) between the heat collector (6) and the collecting container (2), characterised in that the pump (7) is activated by the regulating device whenever the temperature in the heat collector (6) is higher than the temperature of the working substance in the collecting container (2).

12. A device as claimed in claim 11, characterised in that the pump (7) is activated when the temperature in the heat collector (6) exceeds a preselected value.

13. A device as claimed in one of claims 9 to 12, characterised in that the heat collector (6) is arranged such that the working substance can be discharged into the collecting container.

14. A device as claimed in one of the preceding claims 9 to 13, characterised in that the heat collector (6) is connected to a ventilating system which transfers heat from an exhaust air flow to the working substance.

15. A device as claimed in one of claims 7 to 14, characterised in that during the desorption phase water in a hot water store (28) is heated via the condensation heat.

**Fig. 1**

**Fig. 2**